# EUROPEAN PATENT SPECIFICATION

(11) **EP 1 129 030 B1**
(45) Date of publication and mention of the grant of the patent: **12.07.2006**
(21) Application number: 99971398.5
(22) Date of filing: 25.10.1999
(51) Int. Cl.: C01C 1/04

(54) **PROCESS AND CONVERTER FOR THE PREPARATION OF AMMONIA**
VERFAHREN UND VORRICHTUNG ZUR HERSTELLUNG VON AMMONIAK
PROCEDE ET CONVERTISSEUR POUR LA PREPARATION DE GAZ AMMONIAC

(30) Priority: 30.10.1998 WO PCT/DK98/01398
(43) Date of publication of application: 05.09.2001
(73) Proprietor: Haldor Topsoe A/S, 2800 Lyngby (DK)
(72) Inventor: SPETH, Christian, DK-3540 Lynge (DK)
(74) Representative: Grünecker, Kinkeldey, Stockmair & Schwanhäusser Anwaltssozietät
(86) International application number: PCT/EP1999/008055
(87) International publication number: WO 2000/026139

(56) References cited:
- DE-A- 2 929 300
- DE-B- 1 066 551
- DE-C- 973 995
- GB-A- 1 235 565
- US-A- 1 931 678
- US-A- 1 952 021
- NIELSEN A. (ED.): "Ammonia catalysis and manufacture." 1995 , SPRINGER , BERLIN (DE) XP002128241 page 232 -page 237

## Description

The present invention relates to the preparation of ammonia by catalytic conversion of ammonia synthesis gas.

More particularly, this invention concerns synthesis of ammonia at high conversion rates of ammonia synthesis gas in presence of an ammonia synthesis catalyst arranged in a tubular reaction zone being cooled by a specific cooling agent on the shell side of the tubular reaction zone. Synthesis of ammonia from synthesis gas of hydrogen and nitrogen is an exothermic process and the process requires cooling to obtain high conversion rates.

Even if the concentration of hydrogen and nitrogen in the synthesis gas is close to the stoichiometric composition for ammonia formation, complete reaction to ammonia cannot be obtained by a single passage of the synthesis gas through a catalytic bed. Furthermore, due to the exothermic nature of the ammonia synthesis, increasing temperature during passage through the catalytic bed displaces the equilibrium concentration towards lower ammonia concentration. Several methods for cooling the ammonia synthesis process are known.

The usual methods for the preparation of ammonia from synthesis gas employ either indirect or direct cooling of the synthesis gas between a number of catalytic beds, wherein the ammonia synthesis passes over an ammonia synthesis catalyst.

By direct cooling, cold synthesis gas is introduced into partly reacted synthesis gas between the beds. The disadvantage of this cooling method is dilution of the partly reacted gas with unreacted gas resulting in lower ammonia concentration in the product stream from the process.

By the indirect cooling method, partly reacted synthesis gas is cooled by cold gas, usually fresh synthesis gas in a heat exchanger arranged between outlet and inlet of two catalyst beds.

DE-A-2929300 discloses a process for conducting catalytic exothermic reactions in which water is used as cooling agent.

It has now been found that conversion rate of ammonia synthesis gas to ammonia is much improved when cooling the synthesis gas as it proceeds through a catalytic bed of ammonia synthesis catalyst by heat transfer to a specific cooling agent being in continuous heat contact with the process.

The present invention provides a process for the preparation of ammonia comprising the steps of
contacting an ammonia synthesis gas with an ammonia synthesis catalyst arranged as a reaction zone in one or more catalyst tubes;
cooling the reaction zone by a heat conducting relationship with a cooling agent; and
withdrawing an ammonia rich effluent stream from the reaction zone;
wherein the cooling agent is selected from metals, salts and mixtures of salts, each having a melting point below the temperature in the reaction zone.

The present invention further provides a converter for the preparation of ammonia comprising at least one catalyst tube adapted to receive ammonia synthesis gas and to hold a reaction zone of ammonia synthesis catalyst; and
at least one cooling tube concentrically surrounding the at least one catalyst tube and being adapted to hold a cooling agent selected from metals, salts and mixtures of salts, each having a melting point below the temperature in the reaction zone.

Preferred embodiments of the present invention are set forth in the sub-claims.

In its most general embodiment, the above process is carried out in a converter with one or more catalyst tubes arranged in a shell for retaining the cooling agent. Synthesis gas is introduced at top of the catalyst tube and passed through the reaction zone of an ammonia synthesis catalyst. Heat being developed during conversion of hydrogen and nitrogen contained in the synthesis gas to ammonia is continuously transferred through wall of the catalyst tube to the cooling medium surrounding the tube. By continuous cooling of the process, an adiabatic temperature increase is substantially avoided, so that the process is carried out at substantially isothermal conditions. Isothermal conversion of the synthesis gas results in higher conversion rates of the gas to ammonia than in the known ammonia synthesis processes with indirect or direct cooling of partially reacted synthesis gas, where the cooled gas is contacted with the catalyst at adiabatic conditions. Having removed heat of reaction from the reaction zone, the cooling medium is continuously or periodically withdrawn from the converter and externally cooled by e.g. heat exchange with water or steam and recycled to the converter by conventional means.

The cooling agent is retained in a space formed by outer wall of the catalyst tube and inner wall of a cooling tube concentrically surrounding the catalyst tube.

As an advantageous feature of the latter embodiment, shell of a reactor with a number of catalyst tubes can be avoided or made from material with considerably lower mechanical strength than in the conventional ammonia converters.

Preferably, the cooling tubes surrounding the catalyst tubes are designed with a lower mechanical strength than the catalyst tube. In case of catalyst tube rupture reacting gas escaping at high pressure into the cooling tubes, ventilates into a space outside the cooling tube. Thereby, the synthesis gas depressurizes outside the cooling tubes and detrimental reactions of the gas with the cooling agent are avoided advantageously.

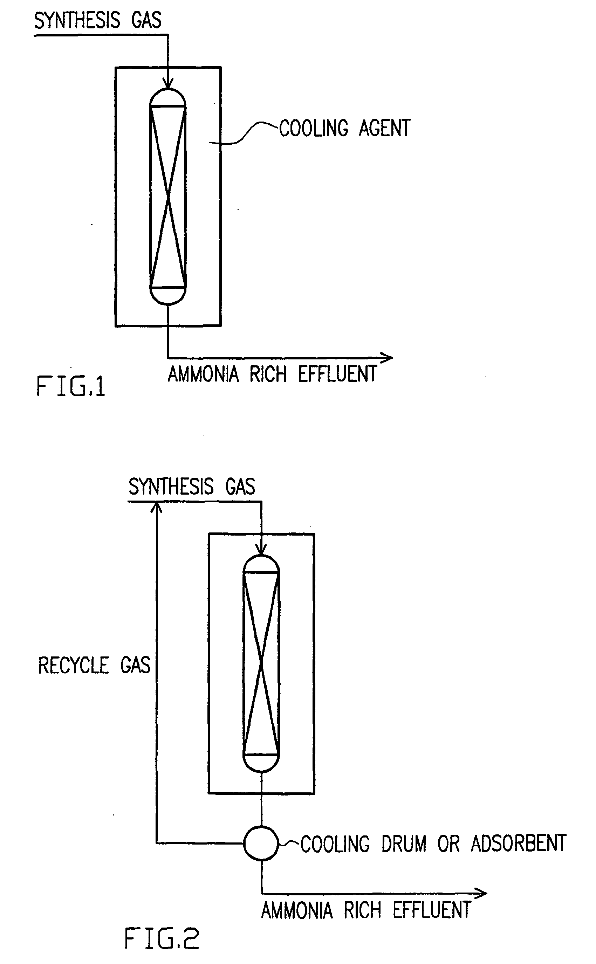

A converter for the preparation of ammonia by reaction of ammonia synthesis gas in presence of an ammonia synthesis catalyst is schematically shown in the attached Fig. 1.

The cooling agents used according to the present invention are selected from metals, salts and mixtures of salts, each having a melting point below the temperature in the reaction zone.

Those cooling agents include eutectic mixtures of salts like mixtures of KNO₃, NaNO₃ and NaNO₂ (supplied by Degussa) and eutectic mixtures of NaOH and KOH. Further eutectic salt mixtures and cooling liquids are well known in the chemical industry. The usual temperature condition in the above process will be between 300°C and 600°C. The temperature of the cooling agent has to be maintained at a predetermined level within the operation temperature range by external cooling of the agent as mentioned herein before.

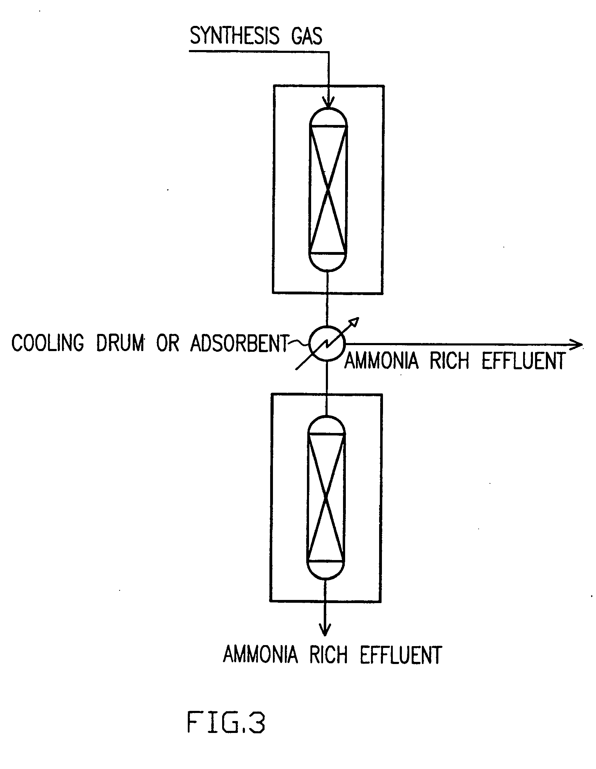

Removal of ammonia from the ammonia rich product gas being withdrawn from the catalyst tubes is further an embodiment of the invention obtained through adsorption on an adsorbent having high affinity to ammonia at high pressure, such as regeneration of the spent adsorbent is carried out through depressurization of the adsorbent and recovery of ammonia rich gas similar to separation of e.g. oxygen or nitrogen in the known pressure swing adsorption processes. Furthermore, ammonia may be separated from unconverted synthesis gas by cooling and condensation of ammonia in the ammonia rich effluent stream from the process. Unreacted synthesis gas being separated from ammonia in the product gas may then be recycled to the catalyst tube or passed to a subsequent catalyst tube for further conversion, as schematically shown in Fig. 2 and Fig. 3.

### Example

In a specific embodiment of the present invention a synthesis feed gas at a pressure of 13.8 MPa is preheated to 350°C and introduced to a reactor furnished with 600 reactor tubes with an inner diameter of 80.1 mm. The tubes were loaded with an upper portion of conventional iron ammonia catalyst and a lower portion of conventional ruthenium ammonia catalyst. Synthesis gas is distributed to the tubes and reacted over the ammonia catalyst. The catalyst tubes are surrounded by a shell. In the space between the shell and the tubes, a salt melt is being circulated countercurrently to the gas flow direction inside the tubes and in heat conducting relationship with the synthesis. Circulation of the salt melt serves to remove heat evolved from the exothermic ammonia synthesis reaction. The salt melt is introduced at 360°C into the cooling space and leaves the reactor at 420°C. The hot melt is cooled outside the reactor to 360°C in a heat exchanger, in which the heat desorbed from the salt melt is used for preheating of synthesis gas. The cooled salt melt is then pumped back to the reactor. Having passed through the catalyst reacted synthesis gas, being rich in ammonia, leaves the tubes and is withdrawn from the reactor. The gas is cooled by heat exchange with fresh synthesis gas.

In Table 1 below are listed the concentrations of the components in the gas stream inlet and exit the reactor as obtained by the above experiment.

**Table 1**

| | | Inlet gas | Exit gas |
|---|---|---|---|
| Composition (mole%): | | | |
| | H₂ | 73.59 | 52.95 |
| | N₂ | 25.37 | 18.73 |
| | Ar | 0.36 | 0.45 |
| | CH₄ | 0.68 | 0.87 |
| | NH₃ | | 27.00 |
| Pressure, MPa | | | 13.4 |
| Temperature, °C | | 13.8 | 402 |
| | | 350 | |

The inventive process may be employed in a one through ammonia synthesis section as well as in a more conventional type ammonia synthesis loop section or in combination with similar or other ammonia converter types in more advanced ammonia synthesis loop sections e.g. comprising feed gas converters and/or purge gas converters. The ammonia product may be retrieved from the ammonia rich product gas in the synthesis section by cooling and condensation of ammonia in the ammonia rich effluent stream or absorption. The removal of ammonia may be conducted in one or more stages, between and/or after each of the reaction zones.

## Claims

1. A process for the preparation of ammonia comprising the steps of
contacting an ammonia synthesis gas with an ammonia synthesis catalyst arranged as a reaction zone in one or more catalyst tubes;
cooling the reaction zone by a heat conducting relationship with a cooling agent; and
withdrawing an ammonia rich effluent stream from the reaction zone;
wherein the cooling agent is selected from metals, salts and mixtures of salts, each having a melting point below the temperature in the reaction zone.

2. The process of claim 1, wherein the ammonia synthesis gas is contacted with the ammonia synthesis catalyst arranged in two or more reaction zones with intermediate withdrawal of an ammonia rich effluent stream between the reaction zones.

3. The process of claim 1, wherein the ammonia rich effluent stream is separated in a stream of unconverted ammonia synthesis gas and an ammonia product stream, the unconverted ammonia synthesis gas is recycled to the reaction zone.

4. The process of claim 2 and 3, wherein the separation is obtained by cooling of the effluent stream and condensation of ammonia

5. The process of claim 2 and 3, wherein the separation is obtained by adsorption of ammonia contained in the effluent stream.

6. The process of claim 1, wherein the cooling agent is circulated within cooling tubes, each surrounding concentrically one catalyst tube.

7. A converter for the preparation of ammonia comprising at least one catalyst tube adapted to receive ammonia synthesis gas and to hold a reaction zone of ammonia synthesis catalyst; and
at least one cooling tube concentrically surrounding the at least one catalyst tube and being adapted to hold a cooling agent selected from metals, salts and mixtures of salts, each having a melting point below the temperature in the reaction zone.

8. The converter of claim 7, wherein the wall of the cooling tube(s) has a lower mechanical strength than the wall of the catalyst tube(s).

## Patentansprüche

1. Verfahren zum Herstellen von Ammoniak, umfassend die folgenden Schritte:
das in Kontakt bringen eines Ammoniaksynthesegases mit einem Ammoniaksynthesekatalysator, der als Reaktionszone in einem Katalysatorrohr oder in mehreren Katalysatorrohren angeordnet ist;
das Kühlen der Reaktionszone mit einem Kühlmittel durch Wärmeübertragung; und
das Entfemen eines Prozessstroms mit einem hohen Ammoniakgehalt aus der Reaktionszone;
wobei das Kühlmittel aus Metallen, Salzen und Salzgemischen ausgewählt wird, die jeweils eine Schmelztemperatur haben, der unterhalb der Temperatur in der Reaktionszone liegt.

2. Verfahren nach Anspruch 1, wobei das Ammoniaksynthesegas mit einem Ammoniaksynthesekatalysator, der in zwei oder mehr Reaktionszonen angeordnet ist, in Kontakt gebracht wird, und wobei zwischen den Reaktionszonen ein Prozessstrom mit einem hohen Ammoniakgehalt abgetrennt wird.

3. Verfahren nach Anspruch 1, wobei der Prozessstrom mit einem hohen Ammoniakgehalt in einen Strom aus nicht umgesetztem Ammoniaksynthesegas und einen Ammoniakproduktstrom aufgetrennt wird und das nicht umgesetzte Ammoniaksynthesegas in die Reaktionszone zurückgeführt wird.

4. Verfahren nach Anspruch 2 oder 3, wobei die Trennung durchgeführt wird, indem der Prozessstrom abgekühlt wird und der Ammoniak kondensiert wird.

5. Verfahren nach Anspruch 2 oder 3, wobei die Trennung durchgeführt wird, indem der Ammoniak, der in dem Prozessstrom enthalten ist, adsorbiert wird.

6. Verfahren nach Anspruch 1, wobei das Kühlmittel in Kühlrohren, die jeweils konzentrisch ein Katalysatorrohr umschließen, zirkuliert wird.

7. Reaktor für die Herstellung von Ammoniak, umfassend
mindestens ein Katalysatorrohr, in das ein Ammoniaksynthesegas eingeleitet wird und das eine Reaktionszone aus einem Ammoniaksynthesekatalysator enthält; und
mindestens ein Kühlrohr, das das mindestens eine Katalysatorrohr konzentrisch umschließt und das ein Kühlmittel enthält, ausgewählt aus Metallen, Salzen und Salzgemischen, die jeweils eine Schmelztemperatur haben, der unterhalb der Temperatur in der Reaktionszone liegt.

8. Reaktor nach Anspruch 7, wobei die mechanische Festigkeit der Wand des Kühlrohrs bzw. der Kühlrohre geringer als die der Wand des Katalysatorrohrs bzw. der Katalysatorrohre ist.

## Revendications

1. Procédé de préparation de l'ammoniac comprenant les étapes consistant à :
- mettre en contact un gaz de synthèse d'ammoniac avec un catalyseur de synthèse d'ammoniac disposé en tant que zone de réaction dans un ou plusieurs tubes pour catalyse ;
- refroidir la zone de réaction par une relation de transfert de chaleur avec un agent de refroidissement ; et
- soutirer un courant d'effluent riche en ammoniac de la zone de réaction ;
dans lequel l'agent de refroidissement est choisi parmi les métaux, les sels et les mélanges de sels présentant chacun un point de fusion inférieur à la température dans la zone de réaction.

2. Procédé selon la revendication 1, dans lequel le gaz de synthèse d'ammoniac est mis en contact avec le catalyseur de synthèse d'ammoniac disposé dans deux zones de réaction ou plus avec soutirage intermédiaire d'un courant d'effluent riche en ammoniac entre les zones de réaction.

3. Procédé selon la revendication 1, dans lequel le courant d'effluent riche en ammoniac est séparé en un courant de gaz de synthèse d'ammoniac non converti et un courant de produit d'ammoniac, le gaz de synthèse d'ammoniac non converti étant recyclé vers la zone de réaction.

4. Procédé selon les revendications 2 et 3, dans lequel la séparation est obtenue par refroidissement du courant d'effluent et condensation de l'ammoniac.

5. Procédé selon les revendications 2 et 3, dans lequel la séparation est obtenue par adsorption de l'ammoniac contenu dans le courant d'effluent.

6. Procédé selon la revendication 1, dans lequel l'agent de refroidissement est mis en circulation à l'intérieur de tubes de refroidissement entourant chacun de manière concentrique un tube pour catalyse.

7. Convertisseur pour la préparation de l'ammoniac comprenant :
- au moins un tube pour catalyse conçu pour recevoir un gaz de synthèse d'ammoniac et pour contenir une zone de réaction de catalyseur de synthèse d'ammoniac ; et
- au moins un tube de refroidissement entourant de manière concentrique ledit au moins un tube pour catalyse et étant conçu pour contenir un agent de refroidissement choisi parmi les métaux, les sels et les mélanges de sels présentant chacun un point de fusion inférieur à la température dans la zone de réaction.

8. Convertisseur selon la revendication 7, dans lequel la paroi du ou des tubes de refroidissement présente une résistance mécanique inférieure à celle de la paroi du ou des tubes pour catalyse.
